# EUROPÄISCHE PATENTSCHRIFT

(11) **EP 1 700 826 B1**
(45) Veröffentlichungstag und Bekanntmachung des Hinweises auf die Patenterteilung: **04.07.2012**
(21) Anmeldenummer: 06003760.3
(22) Anmeldetag: 24.02.2006
(51) Int. Cl.: C02F 1/461, C02F 5/02, C02F 1/46

(54) **Vorrichtung zur Verhütung von Wasserstein in wasserführenden Systemen**
Device for scale prevention in water systems
Dispositif de traitement de l'eau pour la prévention de la formation de tartre

(30) Priorität: 08.03.2005 DE 202005003853 U; 18.04.2005 DE 202005006221 U
(43) Veröffentlichungstag der Anmeldung: 13.09.2006
(73) Patentinhaber: HydroTec Gesellschaft für ökologische Verfahrenstechnik mbH, 95100 Selb (DE)
(72) Erfinder: Fischer, Herbert, 95482 Gefrees (DE)
(74) Vertreter: Graf Glück Habersack Kritzenberger

(56) Entgegenhaltungen:
- EP-A- 1 125 895
- EP-A- 1 361 609
- WO-A-2004/041728
- DE-A- 2 503 819
- DE-A1- 4 007 805
- US-B1- 6 307 733

## Beschreibung

Die Erfindung bezieht sich auf eine Vorrichtung gemäß Oberbegriff Patentanspruch 1.

In Systemen, insbesondere auch in Brauchwassersystemen, die kalziumcarbonhaltiges Wasser führen, besteht generell das Problem, dass dieses Wasser zur Bildung von Kalksteinablagerungen im System führt, welche Schäden an den wasserführenden Einrichtungen verursachen und/oder deren Gebrauch beeinträchtigen, möglicherweise sogar zur Zerstörung solcher Einrichtungen führt.

Bekannt sind Vorrichtungen zur Verhütung der Bildung von Wasserstein, d. h. Kalkschutzgeräte in Form von Enthärtungsanlagen, die auf Ionenaustausch- oder Umkehrosmose basieren.

Weiterhin sind Dosieranlagen bekannt, mit denen dem Wasser kristallisationsinhibierende chemische Stoffe beigemischt werden. Nachteil dieser Vorrichtungen bzw. Verfahren ist aber, dass sie das Wasser nachhaltig chemisch verändern, unter anderem bei mangelhafter Sorgfalt während des Betriebes Folgeprobleme, beispielsweise in Form von Korrosion, Verkeimung und anderen, die Güte bzw. die Verwendung des Wassers beeinträchtigenden Faktoren auftreten können. Im Falle von Trinkwasser besteht darüber hinaus die Gefahr gesundheitlicher Schäden. Weitere Nachteile sind der permanente Einsatz von Chemikalien bei der Dosierung des Wassers oder zur Regeneration der Anlagen sowie der teilweise hohe technische Aufwand, der zum Beispiel bei Umkehr-Osmoseanlagen besteht. Ingesamt wirken sich diese bekannten Vorrichtungen und Verfahren auch nachteilig auf die Umwelt und die schützenswerten Wasserressourcen aus.

Bekannt sind auch Elektrolyseanlagen, die mit Hilfe von internen Elektroden Wasser bzw. wässerige Lösungen von Salzen zersetzen. Diese Anlagen werden allerdings weniger in der Wasseraufbereitung und Wasserbehandlung , sondern bevorzugt in der chemischen Industrie eingesetzt, beispielsweise als Verfahren zur Chlor-Alkali-Elektrolyse von Kochsalzlösungen zur Gewinnung von Natronlauge und Chlor. Die Produktion von Chlor in salzhaltigem Wasser wird auch bei der elektrolytischen Desinfektion von Wasser, z. B. bei Schwimmbädern, ausgenutzt.

Bekannt ist eine Vorrichtung der gattungsbildenden Art (WO-A-2004/041728), bei der die von dem zu behandelnden Wasser durchströmte Elektrodeneinheit von einem hohlzylinderförmigen Wickelkörper aus zwei Lagen aus einem wasserdurchlässigen, aber elektrisch leitenden Flachmaterial und aus dazwischen liegenden weiteren Lagenaus einem elektrisch nicht leitenden, aber ebenfalls wasserdurchlässigen Material derart gebildet ist, dass die beiden Lagen aus dem elektrisch leitenden Material zwei Elektroden bilden, die durch die Lagen aus dem elektrisch nicht leitenden Material voneinander getrennt sind. Als Anschlusselemente dienen zwei konzentrisch zueinander angeordneten hohlzylinderartige Elektrodenelemente aus einem elektrisch leitenden Material mit Gitterstruktur. Zwischen diesen Anschlusselementen ist der die Elektrodeneinheit bildende Wickelkörper derart angeordnet, dass jede elektrisch leitende Lage der Elektrodeneinheit mit einem Anschlusselement in Berührungskontakt steht und hierdurch eine elektrische Verbindung zwischen dem jeweiligen Anschlusselement und der zugehörigen elektrisch leitenden Lage der Elektrodeneinheit gebildet ist. Nachteilig ist weiterhin, dass die Anschlusselemente im wasserführenden Bereich der Vorrichtung ungeschützt angeordnet sind und somit die Gefahr eines elektrolytischen Abtrags des Materials dieser Anschlusselemente besteht, und zwar insbesondere auch dort, wo die elektrische Verbindung zu den elektrisch leitenden Lagen der Elektrodeneinheit erforderlich ist.

Bekannt ist weiterhin eine Vorrichtung zur Verhütung von Wasser- oder Kalkstein in wasserführenden Systemen (EP 1 125 695 A1), bei der in einem von dem zu behandelnden Wasser durchströmten Innenraum der Vorrichtung zwei jeweils kreiszlyinderförmige Elektroden konzentrisch zueinander und voneinander beabstandet an der Innen-oder Außenfläche eines porösen, wasserdurchlässigen Trägers gebildet sind. Die von dem Wasser durchströmten Behandlungsstrecke ist bei dieser Vorrichtung auf den einzigen, zwischen den beiden Elektroden gebildeten ringförmigen Bereich innerhalb des Stützkörpers beschränkt.

Bekannt ist weiterhin eine Vorrichtung zum Reinigen von Abwasser mittels Elektrolyse (EP-A-40 07 805). Diese Vorrichtung besteht aus mehreren konzentrisch zueinander angeordneten zylinderartigen Elektroden, die zwischen sich mehrere Ringräume derart bilden, dass diese von dem zu reinigenden Abwasser axial und mehrfach gegenläufig, d.h. von oben nach unten und anschließend von unten nach oben usw, durchströmt werden. Über streifenförmige Anschlusselemente, die mit ihrer Längserstreckung parallel zur Achse der zylinderförmigen Elektroden angeordnet sind, sind letztere mit elektrischen Spannungsquellen verbindbar.

Bekannt ist schließlich (US-B1-6 307 733) bei der Herstellung von gewickelten Kondensatoren Anschlusselemente bildende Streifen aus elektrisch leitenden Material mit einzuwickeln, und zwar derart, dass diese Streifen mit ihrer Längserstreckung wiederum parallel zur Achse des Wirkelkörpers orientiert sind.

Bekannt ist auch eine Elektrodenanordnung für chemische Zellen (DE 25 03 819 A), die im Wesentlichen aus zwei sich um eine Elektrodenachse spiralförmig erstreckenden und jeweils eine Elektrode bildenden Lagen aus einem elektrisch leitenden Material sowie aus dazwischen liegenden, sich ebenfalls_spiralförmig um die Elektrodenachse erstreckenden Lagen aus einem elektrisch isolierenden Material besteht, und zwar derart, dass sich radial zur Elektrodenachse eine abwechselnde Anordnung der leitenden und nicht leitenden Lagen ergibt und die die Elektroden bildenden Lagen jeweils durch eine elektrisch nicht leitenden und als Abstandhalter zwischen den Elektroden dienende Lage von einander beabstandet sind. Die Lagen sind radial sowie auch axial bezogen auf die Elektrodenachse von dem jeweils zu behandelnden Medium (Elektroklyt) durchströmbar. Der elektrische Anschluss der elektrisch leitender Lagen wird über mitgewickelte, leitende Entdichtungsstreifen an den Randbereichen des Wickelkörpers erreicht. Zur Vermeidung eines axialen Austretens des Behandlungsmediums an den Randbereichen und zur Verhinderung einer Korrosion des jeweiligen elektrischen Anchlusses durch das Behandlungsmedium ist eine Dichtungsmasse an der dem jeweiligen_Randbereich abgewandten innenliegenden Seite des Dichtungsstreifens vorgesehen.

Aufgabe der Erfindung ist es, eine Vorrichtung aufzuzeigen, mit der eine Verhütung von Wasserstein in wasserführenden Systemen wirksam erreicht wird, und zwar ohne den Einsatz von chemischen Mitteln. Zur Lösung dieser Aufgabe ist eine Vorrichtung entsprechend dem Patentanspruch 1 ausgebildet.

Mit der Erfindung wird eine wirksame Verhinderung von Wassersteinablagerungen ohne signifikante chemische Veränderung des Wassers und ohne Einsatz von Chemikalien möglich. Der Erfindung liegt die Erkenntnis zugrunde, dass sich der in kalkhaltigem Wasser enthaltene Kalk bevorzugt nur aus dem chemisch gelösten, ionischen Zustand an Fremdkörperoberflächen anlagert und dann die harten, schwer entfernbaren Ablagerungen bzw. Inkrustierungen bildet. Dabei kann sich Kalk nach den Regeln der Thermodynamik aber nur solange ausscheiden, solange er sich im sogenannten übersättigten Zustand befindet. Dies bedeutet, dass sich niemals die gesamte, im Wasser vorhandene Kalkmenge, sondern immer nur der übersättigte Anteil ausscheidet. Aufgrund der kinetischen Hemmung fällt aber Kalk in niedrig übersättigtem Zustand nicht spontan im Wasservolumen aus, sondern lagert sich (energetisch begünstigt) bevorzugt an Fremdkörperoberflächen an, was dann die vorstehend genannten Wassersteinablagerungen, harten schwer entfernbaren Ablagerungen bzw. Inkrustierungen mit den genannten Nachteilen bedingt.

Bei der Erfindung wird nun im kalkhaltigen Wasser durch temporäre, lokale Änderungen des pH-Wertes die kinetische Hemmung der Kristallisation aufgehoben und dadurch die Bildung so genannter Nanokristalle im Wasservolumen veranlasst, die aufgrund ihrer großen spezifischen Oberfläche als Impfkristalle für die Bindung des gesamten, im Übersättigungszustand befindlichen Kalks zur Verfügung stehen. Die in der Folge der weiteren Kristallisation gebildeten Kalkkristalle sind über sehr lange Zeit (bis mehrere Tage) im Wasser schwebfähig und besitzen oberflächlich keine ausreichenden Bindungskräfte untereinander oder zu Fremdoberflächen und können so keine harte Ablagerungen bilden. Harte Abscheidungen oder Kalkablagerungen, die zu Störungen in dem wasserführenden System führen könnten, können somit nicht auftreten.

Die Erfindung wird im Folgenden anhand der Figuren an Ausführungsbeispielen näher erläutert. Es zeigen:

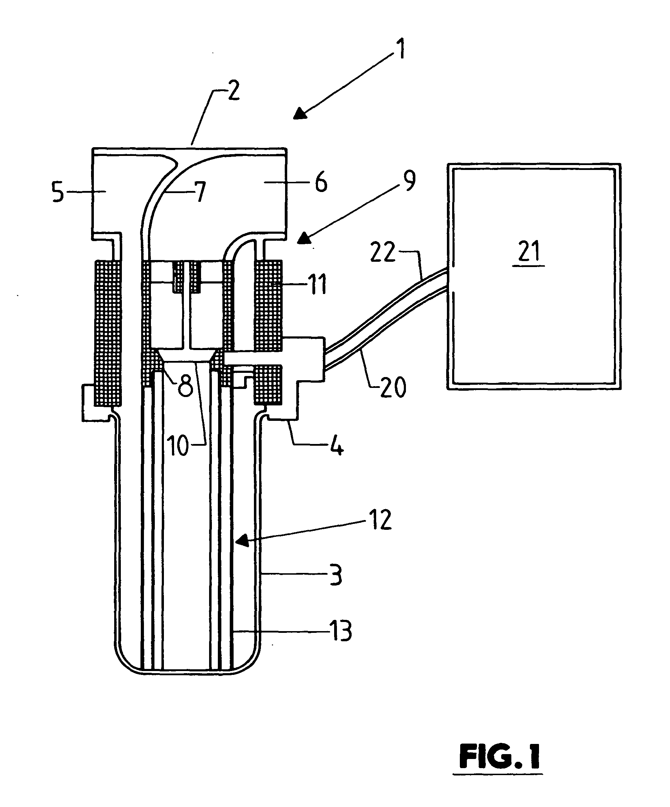

- Fig. 1: in vereinfachter Darstellung einen Schnitt durch eine Vorrichtung gemäß der Erfindung;
- Fig. 2 und 3: einen Längsschnitt bzw. einen Querschnitt durch die Filterelektrode der Elektrodeneinheit der Vorrichtung gemäß Figur 1;
- Fig. 4: in vergrößerter Darstellung drei Schichten der Filterelektrode;
- Fig. 5: eine schematische Darstellung zur Erläuterung der Anschlüsse an elektrisch leitenden Schichten der Filterelektrode;
- Fig. 6: in einer ähnlichen Darstellung wie Figur 5 eine weitere mögliche Ausführungsform.

Die in den Figuren allgemein mit 1 bezeichnete Vorrichtung zur Verhütung von Wasserstein in wasserführenden Systemen besitzt ein Gehäuse, welches ähnlich den bekannten Gehäusen von Hauswasserfiltern ausgebildet ist, d. h., das Gehäuse besteht im wesentlichen aus einem oberen Gehäuseteil 2 und einem unteren, als langgestreckte, geschlossene Kappe ausgebildeten Gehäuseteil 3, welches mit seiner offenen Seite über eine Verschraubung 4 an dem unteren, offenen Ende des Gehäuseteils 2 dicht befestigt werden kann. Das Gehäuseteil 2 besitzt einen Anschluss 5, der den Wassereinlass bildet, sowie einen Anschluss 6, der den Wasserauslass bildet.

Das untere Gehäuseteil 3, aber auch das obere Gehäuseteil 2 (im Anschlussbereich mit dem Gehäuse Teil 3) sind kreiszylinderförmig ausgebildet, und zwar konzentrisch zu einer Mittelachse M, die senkrecht zu den Achsen der Anschlüsse 5 und 6 liegt. Die Anschlüsse 5 und 6 sind achsgleich angeordnet.

Im Gehäuseteil 2 ist weiterhin eine von einem rohrförmigen Abschnitt gebildete Wasserführung 7 derart vorgesehen, dass diese Wasserführung oder dieser Kanal 7 einerseits den Anschluss 6 bildet, andererseits aber im Inneren des Gehäuses einen internen Anschluss 8 mit einer Öffnung, die mit ihrer Achse achsgleich mit der Mittelachse M angeordnet ist und in einer Ebene senkrecht zu dieser Miltelachse liegt.

Im Bereich des Anschlusses 8 ist ein Durchflusssensor 9 vorgesehen, de bei der dargestellten Ausführungsform aus einem in der Wasserführung 7 angeordneten und zugleich auch als Rückschlagventil dienenden Sensorelement 10 und aus einer äußeren Spule 11 besteht, deren Induktivität sich in Abhängigkeit von der Lage des Sensorkörpers 10 verändert und die damit ein von der Durchführungsmonge abhängiges Sensorsignal ermöglicht. Die Position des Sensorkörpers 10 ist abhängig von der die Wasserführung 7 durchströmenden Wassermenge.

Unterhalb des Sensorkörpers 10 bzw. des Durchflussmessers 9 ist am Anschluss 8 eine rohrförmige oder hohlzylinderförmige Elektrodeneinheit 12 mit ihrem einen offenen Ende angeschlossen. Das andere Ende der Elektrodeneinheit 12 stützt sich gegen die Innenseite des Bodens des Gehäuseteils 3 ab und ist dort abgedichtet.

Zwischen der Außenfläche der Elektrodeneinheit 12 und der Innenfläche der zylinderförmigen Umfangswende der Gehäuseteile 2 und 3 ist ein Ringkanal 13 gebildet, der mit dem Anschluss 5 in Verbindung steht, so dass vom Anschluss 5 zum Anschluss 6 hin ein Wasserstrom möglich ist, und zwar durch den Ringkanal 13, durch die Wandung der Elektrodeneinheit 12 in das Innere der Elektrodeneinheit und von dort über den Kanal 7 an den Anschluss 6.

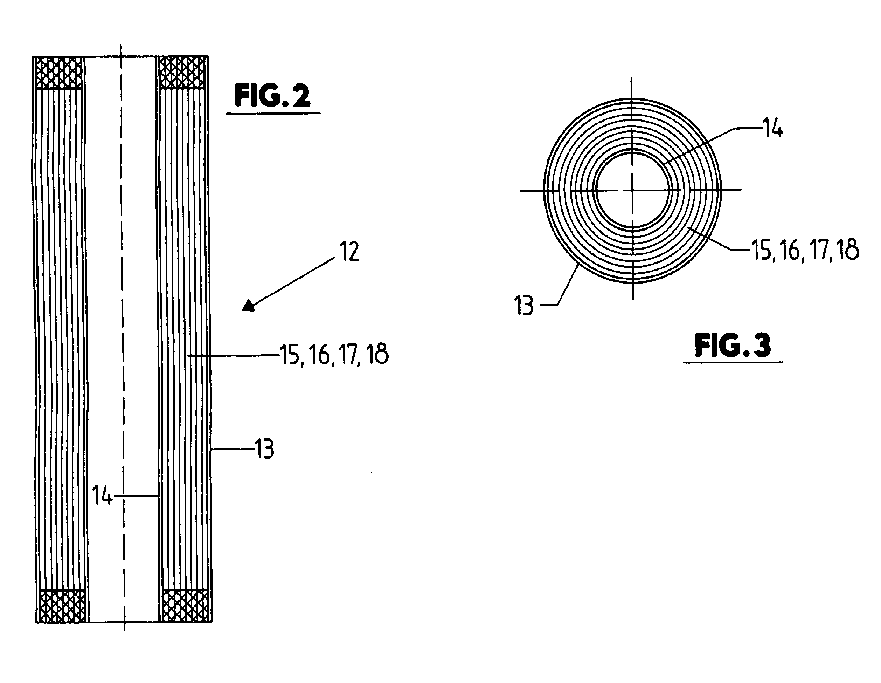

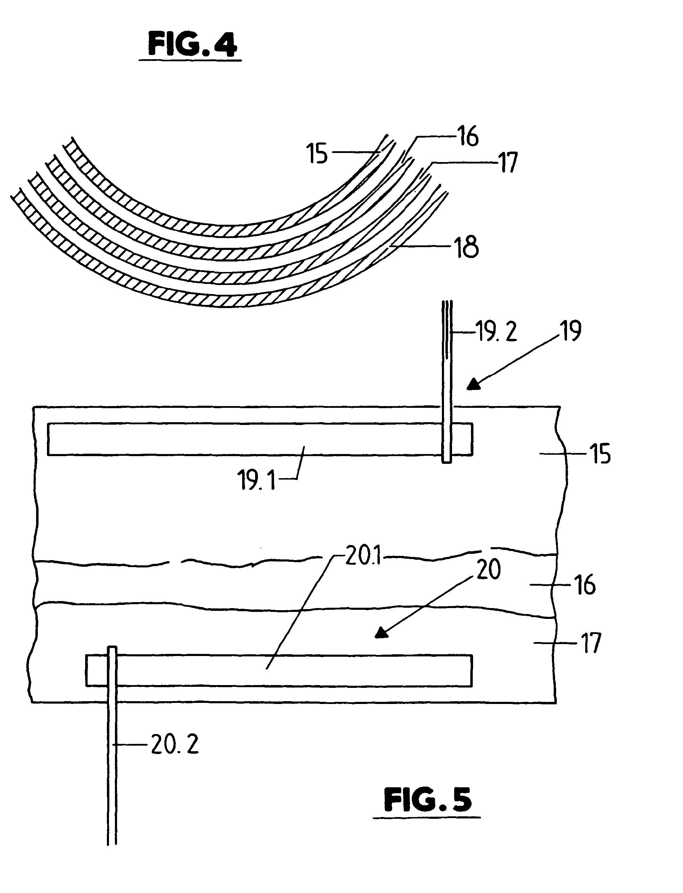

Die Figuren 2 - 5 zeigen im Detail den Aufbau der Elektrodeneinheit 12. Diese ist bei der dargestellten Ausführungsform als Wickelkörper ausgebildet, und zwar aus Gründen der mechanischen Festigkeit mit einem äußeren Stützzylinder 13 und einem inneren Stützzylinder 14, der konzentrisch von dem äußeren Stützzylinder 13 umschlossen ist. Beide Zylinder bestehen aus einem elektrisch isolierenden, aber wasserdurchlässigen, d. h. perforierten oder netz- oder gitterartigen Material. In dem zwischen den beiden Stützzylindern 13 und 14 ist ein mehrlagiger Wickelkörper aus einem filterartig wirkenden Material, d. h. aus einem wasserdurchlässigen Flachmaterial angeordnet, und zwar jeweils abwechselnd eine elektrisch leitende Lage 15, eine elektrisch nicht leitende Lage 16, eine elektrisch leitende Lage 17 und eine elektrisch nicht leitende Lage 18, an die sich dann im Winkelkörper erneut die elektrisch leitende Lage 15 usw. anschließt. Die elektrisch leitenden Lagen 15 und 17 bestehen aus einem Kohlefaservlies oder aus einem mit einem elektrisch leitenden Material, beispielsweise mit Metall und/oder Kohlenstoff beschichteten Kunststoffvlies und die elektrisch nicht leitenden Lagen 16 und 17 aus einem Kunstfaservlies. Die Lagen sind in geeigneter Weise mechanisch miteinander verbunden und bilden die eigentliche Filterelektrode. Die Lagen sind spiralförmig um die gemeinsame Längsachse L der Elektrodeneinheit 12 gewickelt. Die elektrisch leitenden Lagen 15 und 17 können auch von Beschichtungen der Lagen 16 und 18 oder umgekehrt die Lagen 16 und 18 von Beschichtungen der Lagen 15 und 17 gebildet sein.

Zur elektrischen Kontaktierung der Lage 15 und der Lage 17 sind als Anschlusselektroden oder Anschlusselemente 19 und 20 zwei Streifen 19. 1 bzw. 20.1 aus einer Metallfolie oder einem Metallblech mitgewickelt und zwar als Anschlusselement 19, der schmaler Metallstreifen 19.1 am oberen Ende der Elektrodeneinheit 12 und als Anschlusselement 20 der schmaler Metallstreifen 20.1 am unteren Ende der Elektrode 12, und zwar derart, dass der Metallstreifen 19.1, der sich nur über einen Bruchteil der Höhe der Elektrodeneinheit 12 erstreckt, einen elektrischen Kontakt zu der Lage 15 und der Metallstreifen 20.1, der sich ebenfalls nur über einen Bruchteil der Höhe der Elektrodeneinheit 12 erstreckt, einen elektrischen Kontakt zur Lage 17 herstellen. Beide Anschlusselemente 19 und 20 bzw. die diese Elektroden bildenden Metallstreifen 19.1 und 20.1 sind mit einer Anschlussleitung 19.2 bzw. 20.2 versehen, die aus dem Winkelkörper bzw. der Elektrodeneinheit 12 herausgeführt ist und über die die Elektrodeneinheit 12 mit einer Versorgungsleitung 22 einer Ansteuerelektronik 21 verbunden ist.

Um den elektrischen Übergang zwischen den Anschlusselementen 19 und 20 und der jeweiligen Lage 15 bzw. 17 niedrig zu halten, sind diese Lagen dort, wo die Metallstreifen 19.1 bzw. 20.1 aufliegen beispielsweise Metallisiert, sodass die Metallstreifen 19.1 und 20.1 dann durch Löten oder eine andere geeignete Technik mit den Lagen 15 und 1 7 zuverlässig elektrisch verbunden sind.

Durch die beschriebenen Anschlusselemente 19 und 20 wird eine gleichmäßige Stromverteilung in den als Behandlungselektroden wirkenden Lagen 15 und 17 erreicht, obwohl diese Lagen durch ihre Herstellung aus einem Kohlefaservlies oder einem anderen, elektrisch leitenden Flachmaterial bzw. Flies einen relativ hohen elektrischen Flächenwiderstand aufweisen. Weiterhin werden durch die Anschlusselemente 19 und 20 bzw. durch die mitgewickelten Metallstreifen 19.1 und 20.1 auch Stromkonzentrationen vermieden, die zu einer partiellen Schädigung der die Behandlungselektroden bildenden Lagen 15 und 17 führen könnten.

Am oberen und unteren Rand, d. h. dort, wo auch die Anschlusselemente 19 und 20 vorgesehen sind, sind die Stützzylinder 13 und 14 sowie auch die Lagen 15-18 durch Vergießen mit einem geeigneten Kunststoff zusammengehalten und nach außen hin elektrisch isoliert, insbesondere auch die dortigen Ränder der Lagen 15 und 17.

Bei diesem Vergießen werden die einzelnen, flüssigkeitsdurchlässigen Lagen 15-18 im Bereich des oberen und unteren Randes mit dem Kunststoff derart durchtränkt, sodass sich dort ringförmige, faserverstärkte Abschlüsse aus Kunststoff ergeben, die der Elektrodeneinheit 12 auch eine erhöhte Stabilität verleihen. Durch das Vergießen ist weiterhin auch erreicht, dass die mit den Lagen 15 und 17 mitgewickelten Metallstreifen 19.1 und 20.1 vollständig in der Vergussmasse eingebettet sind und damit am oberen und unteren Rand die Vergussmasse zusammen mit den Lagen 15 - 18 eine faserverstärkte Isolierschicht bildet. Hierdurch ist sichergestellt, dass als Behandlungselektroden tatsächlich die von den Anschlusselementen 19 und 20 bzw. von den mitgewickelten Metallstreifen 19.1 und 20.1 nicht abgedeckten Bereich der Lagen 15 und 17 wirken. Für die Anschlusselemente können somit beliebige Metalle verwendet werden, insbesondere auch solche, die eine einfache und problemlose Kontaktieren mit den als Behandlungselektroden wirkenden Lagen 15 und 17 ermöglichen. Es ist insbesondere nicht notwendig, für die Anschlusselemente 19 und 20 spezielle, edle Metalle zu verwenden. Die Gefahr eines elektrolytischen Abtrags besteht für die Anschlusselemente nicht, da diese vollständig im Kunststoffmaterial eingebettet sind.

Bei der dargestellten Ausführungsform erstrecken sich die die Anschlusselemente 19 und 20 bildenden Metallstreifen 19.1 und 20.1 über eine ausreichend große Länge der als Behandlungselektroden wirkenden Lagen 15 und 17, bevorzugt jeweils über die gesamte Länge dieser Lagen.

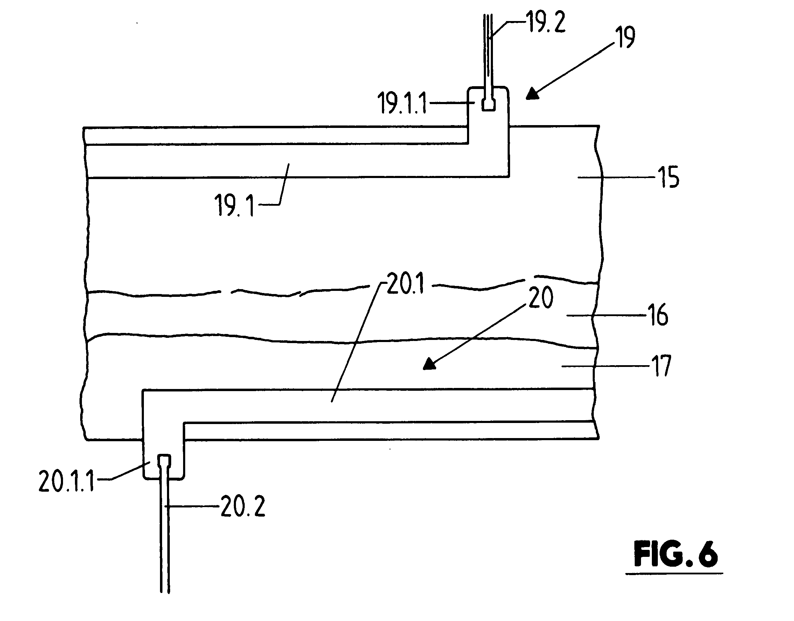

Um auch dort, wo die Anschlusselemente 19 und 20 aus der die Elektrodeneinheit bildenden Wicklung herausgeführt sind, eine möglichst homogene Wicklung zu erreichen, sind entsprechend der Figur 6 die Metallstreifen 19.1 bzw. 20.1 jeweils mit einer angeformten Lasche 19.1.1 bzw. 20.1.1 versehen, die aus der Elektrodeneinheit 12 bzw. aus der diese Einheit bildenden Wicklung vorsteht und an der dann der jeweilige äußere Anschluss 19.2 bzw. 20.2 angeschlossen ist.

Einerseits dient die Elektrodeneinheit 12 als herkömmliches Filter. Die Elektrodeneinheit 12 dient aber insbesondere auch für eine elektrolytische Behandlung des das Gehäuse durchströmenden Wassers in der Weise, dass durch eine bei der Elektrolyse erreichte, d. h. im Bereich der als Kathode wirkenden Elektrode erreichte lokale Änderung des PH-Wertes, die kinetische Hemmung der Kristallisation der im Wasser vorhandenen Kalkmenge aufgehoben wird und es so zur Bildung sogenannter Nanokristalle im Wasservolumen kommt, die dann aufgrund ihrer großen spezifischen Oberfläche als Impfkristalle für die Bindung des gesamten, im Übersättigungszustand befindlichen Kalks zur Verfügung stehen. An diesen Nanokristallen bzw. Impfkristallen erfolgt dann die weitere Kristallisation und dabei die Abscheidung weiterer, im Wasser gelöster Kalkmengen, so dass dem Wasser soviel Kalk entzogen wird, dass sich Kalk nicht an Fremdkörperoberflachen, wie z. B. an Oberflächen wasserführender Rohre, in Boilern usw. ablagern kann. Die durch Kristallisation an den Impfkristallen entstehenden Kristalle sind über Stunden bis zu Tagen im Wasser schwebefähig und besitzen oberflächlich keine ausreichenden Bindungskräfte untereinander oder zu Oberflächen, so dass es zu keinen harten Ablagerungen an Oberflächen oder zu den Wasserfluss störenden Kalkausscheidungen kommen kann.

Die steuerelektronik 21 liefert für die elektrolytische, lokale Änderung des PH-Wertes, eine Gleichspannung an die als Behandtungselektroden wirkenden Lagen 15 und 17 mit unterschiedlicher Polarität, beispielsweise eine Gleichspannung im Niederspannungsbereich zwischen 2-24 Volt. Diese Gleichspannung wird beispielsweise in Abhängigkeit von dem vom Durchflusssensor 9 ermittelten WasserDurchfluss gesteuert oder geschaltet, beispielsweise getaktet oder in Form von Gleichspannungsimpulsen, deren Anzahl je Zeiteinheit proportional zum Wasserdurchfluss ist. Bei fehlendem Wasserfluss wird die Spannung an der Flektrodeneinheit 12 abgeschaltet.

Grundsätzlich besteht auch die Möglichkeit, die Steuerelektronik 21 so auszubilden, dass die zwischen den Lagen 15 und 17 anliegende Spannung sich aus einem Gleichspannungsanteil und aus wenigstens einer überlagerten Wechselspannung und/oder Überlagerten Impulsen zusammensetzt. Weiterhin besteht die Möglichkeit, dass die an den Lagen 15 und 17 anliegende Spannung bzw. deren Polarität nach einem bestimmten Zeilprogramm geändert wird.

Die vorzugsweise Mikroprozessor gestützte Steuerelektronik 21 ist beispielsweise weiterhin so ausgeführt, dass sie die Spannung zwischen den als Behandlungselektroden wirkenden Lagen 15 und 17 entsprechend vorgegebenen Spannungswerten regelt und/oder konstant hält. Oder aber den an die Elektrodeneinheit fließenden Strom entsprechend vorgegebenen Sollwerten regelt oder konstant hält.

Ist die an der Elektrodeneinheit anliegende Spannung eine Wechselspannung oder eine Impulsspannung, so liegt die Frequenz im mittelfrequenten Bereich.

Wesentliche Vorteile der Vorrichtung 1 bestehen u.a. in geringen Betriebskosten, in einem minimalen Stromverbrauch, in einem in Bezug auf mögliche Folgenschäden risikolosen Betrieb und in einem äußerst geringen Wartungsaufwand, so dass die erfindungsgemaße Vorrichtung bisher auf dem Markt erhältliche Einrichtungen an Effizienz, Ökonomie, ökologischer Verträglichkeit und Produktsicherheil deutlich übertrifft. Ein weiterer wesentlicher Vorteil der Vorrichtung 1 besteht darin, dass durch Entfernen des unteren Gehäuseteils 3 die kartuschenartige Elektrodeneinheit 12 leicht ausgewechselt werden kann und auch evtl. Fremdstoffe, die sich innerhalb der Elektrodeneinheit 12 angelagert haben, entfernt werden können.

Vorstehend wurde davon ausgegangen, dass der Durchflusssensor 9 vor einem kolbenartigen Sensorelement gebildet ist. Selbstverstandlich ist es auch möglich, andere Durchflusssensoren vorzusehen. Weiterhin wurde vorstehend davon ausgegangen, dass der Wasserzufluss über den Anschluss 5 und der Wasserafluss über den Anschluss 6 erfolgen. Selbstverständlich ist es auch möglich, die Strömungsrichtung so zu ändern, dass das zu behandelnde Wasser über den Anschluss t zugeführt und das behandelte Wasser über den Anschluss 5 abgeführt wird, so dass das Wasser dann die Elektrodeneinheit 12 radial von innen nach außen durchströmt.

Vorstehend wurde davon ausgegangen, dass die Anschlusselemente von Metallstreifen 19.1 und 20.1 gebildet sind, die mit den entsprechenden Behandlungselektroden bzw. Lagen 15 und 17 elektrisch verbunden sind. Grundsätzlich besteht auch die Möglichkeit, den Metallstreifen entsprechende Metallisierungen auf die elektrisch leitenden Lagen 15 und 17 bzw. auf dortige, elektrisch leistende Schichten durch chemisches und/oder elektrolytisches Abscheiden von Metall, beispielsweise Kupfer aufzubringen, wobei diese Lagen dann beispielsweise zur Bildung entsprechender, nach außen geführte Anschlüsse an ihren Rändern mit vorstehenden Flaschen ausgeführt sind, die die Metallisierung ebenfalls aufweisen.

Bestehen die Lagen 15 und 17 aus einemKohlefaservlies, mit welchem die Kohlefasern eine bevorzugte Richtung aufweisen, so sind diese Fasern dann in Richtung der Achse der Elektrodeneinheit 12 orientiert und damit senkrecht oder im Wesentlichen senkrecht zu den Metallstreifen 19.1 und 20.1 bzw. zu einer entsprechenden streifenförmigen Metallisierung.

### Bezugszeichenliste

- 1: Vorrichtung
- 2,3: Gehäuseteil
- 4: Verschraubung
- 5,6: Anschluss
- 7: Kanal
- 8: interner Anschluss
- 9: Durchflusssensor
- 10: Sensorelement
- 11: Spule
- 12: Elektrodeneinheit
- 13, 14: Stützzylinder
- 15 - 18: Lage des die Elektrodeneinheit bildenden Wickelkörpers
- 19, 20: Anschlusselement
- 19.1, 20.1: Metallfolienstreifen
- 19.1.1, 20.1.1: Anschlusslasche
- 19.2, 20.2: Anschlussleitung
- 21: Steuerelektronik
- 22: Versorgungsleilung

## Patentansprüche

1. Vorrichtung zur Verhütung von Wasser oder Kalkstein in wasserführenden Systemen, mit wenigstens einer in einem Reaktionsgefäß oder -gehäuse (2, 3) der Vorrichtung untergebrachten und vom Wasser radial durchströmbaren Elektrodeneinheit (12), die aus einem äußeren wasserdurchlässigen Stützzylinder (13) und einem inneren; ebenfalls wasserdurchlässigen Stützzylinder (14), der konzentrisch von dem äußeren Stützzylinder (13) umschlossen ist, sowie aus einem hohlzylinderförmigen, zwischen den Stützzylindern (13, 14) angeordneten Winkelkörper besteht, der aus wenigstens zwei Lagen (15, 17) aus einem wasserdurchlässigen, elektrisch leitenden Flachmaterial und aus wenigstens zwei weiteren Lagen (16, 18) aus einem wasserdurchlässigen, elektrisch nicht leitenden Material durch Wickeln so gefertigt ist, dass im Wickelkörper sich eine abwechselnde Anordnung der elektrisch leitenden Lagen (15, 17) und der elektrisch nicht leitenden Lagen (16, 18) ergibt, wobei die aus einem Kohlefaservlies oder aus einem mit einem elektrisch leitenden Material beschichteten Kunststoffvlies bestehenden elektrisch leitenden Lagen (15, 17) wenigstens zwei Behandlungselektroden bilden, die jeweils mit einem Anschlusselement (19, 20) versehen und durch die elektrisch nicht leitenden Lagen (16, 18) getrennt sind,
**dadurch gekennzeichnet,**
**dass** die den Winkelkörper bildenden Lagen (15 - 18) an einem oberen und an einem unteren ringförmigen Randbereich des Wickelkörpern mit einer Vergussmasse aus Kunststoff vergossen sind,
**dass** die Anschlusselemente (19, 20) jeweils von wenigstens einem Streifen aus einem elektrisch leitenden Material aus einer Metallfolie oder einem Metallblech gebildet und derart mit den Lagen (15, 18) mitgewickelt sind, dass die Streifen aus dem elektrisch leitenden Material nach dem Vergießen der ringförmigen Randbereiche des Wickelkörpers mit der Vergussmasse in dieser vollständig eingebettet sind, wobei sich die Anschlusselemente (19, 20) jeweils lediglich über einen Bruchteil der Höhe der Elektrodeneinheit (12) erstrecken,
**dass** die Anschlusselemente (19, 20) mit einer Anschlussleitung (19.2, 20.2) versehen sind und
**dass** die Stützzylinder (13, 14) aus einem elektrisch isolierenden Material bestehen.

2. Vorrichtung nach Anspruch 1, **dadurch gekennzeichnet, dass** die die Anschlusselemente (19, 20) bildenden Metallstreifen (19.1, 20.1) durch Löten und/oder durch Verkleben mit einem elektrisch leitenden Kleber mit der zugehörigen elektrisch leitenden Lage (15, 17) verbunden sind.

3. Vorrichtung nach einem der vorhergehenden Ansprüche, **dadurch gekennzeichnet, dass** sich die die Anschlusselemente (19, 20) bildenden Streifen aus elektrisch leitendem Material über einen Großteil der Länge der die Elektroden bildenden Lagen (15, 17) erstrecken.

4. Vorrichtung nach einem der vorhergehenden Ansprüche, **dadurch gekennzeichnet, dass** die die Anschlusselemente (19, 20) bildenden Streifen aus dem elektrisch leitenden Material von auf die elektrisch leitenden Lagen (15, 17) aufgebrachte Metallisierungen gebildet sind, beispielsweise unter Verwendung von die Metallisierungen bildenden Pasten, durch chemisches und/oder elektrolytisches Abscheiden.

## Claims

1. Device for preventing limescale in water-conveying systems, with at least one electrode unit (12) which is housed in a reaction vessel or housing (2, 3) of the device and through which water can pass radially and which consists of an outer water-permeable support cylinder (13) and an inner likewise water-permeable support cylinder (14) which is enclosed concentrically by the outer support cylinder (13), as well as of a hollow cylindrical winding body which is mounted between the support cylinders (13, 14) and which is made from at least two layers (15, 17) of a water-permeable electrically conductive flat material and at least two further layers (16, 18) of a water-permeable electrically non-conductive material which are wound so that the electrically conductive layers (15, 17) and the electrically non-conductive layers (16, 18) are arranged in alternation in the winding body whereby the electrically conductive layers (15, 17) which consist of a carbon fibre fleece or a plastics fleece coated with an electrically conductive material form at least two processing electrodes which are each provided with a connector element (19, 20) and are separated by the electrically non-conductive layers (16, 18), **characterised in that** the layers (15 - 18) forming the winding body are cast at an upper and at a lower ring-shaped marginal area of the winding body with a casting substance of plastics, that the connector elements (19, 20) are each formed by at least one strip of an electrically conductive material of a metal foil or a metal plate and are wound together with the layers (15, 18) in such a way that the strips of the electrically conductive material after casting with the ring-shaped marginal areas of the winding body with the casting substance are completely embedded in the latter whereby the connector elements (19, 20) each extend only over a fraction of the height of the electrode unit (12), that the connector elements (19, 20) are provided with a connector lead (19.2, 20.2) and that the support cylinders (13, 14) are made from an electrically insulating material.

2. Device according to claim 1 **characterised in that** the metal strips (19.1, 20.1) which form the connector elements (19, 20) are connected to the associated electrically conductive layer (15, 17) by soldering and/or by sticking with an electrically conductive adhesive.

3. Device according to one of the preceding claims **characterised in that** the strips of electrically conductive material forming the connector elements (19, 20) extend over a major part of the length of the layers (15, 17) which form the electrodes.

4. Device according to one of the preceding claims **characterised in that** the strips of the electrically conductive material forming the connector elements (19, 20) are formed by metal plating applied to the electrically conductive layers (15, 17), by way of example by using pastes which form the metal plating, through chemical and/or electrolytic precipitation.

## Revendications

1. Dispositif de prévention de la formation de tartre ou de calcaire dans les systèmes de canalisation d'eau, comportant au moins une unité d'électrode (12) logée dans un récipient ou un boîtier réactionnel (2, 3) du dispositif et pouvant être parcourue radialement par l'eau, qui consiste en un cylindre d'appui externe perméable à l'eau (13) et en un cylindre d'appui interne également perméable à l'eau (14), qui est entouré sur le plan concentrique par le cylindre d'appui externe (13), et en un enroulement en forme de cylindre creux disposé entre les cylindres d'appui (13, 14) qui est constitué d'au moins deux couches (15, 17) formées d'un matériau plat perméable à l'eau, électriquement conducteur et d'au moins deux autres couches (16, 18) formées d'un matériau perméable à l'eau, électriquement non conducteur de telle sorte que dans l'enroulement se trouvent en alternance les couches électriquement conductrices (15, 17) et les couches non électriquement conductrices (16, 18), dans lequel les couches électriquement conductrices (15, 17) constituées d'un tissu de fibres de carbone ou d'un tissu de fibres de carbone revêtu d'un matériau électriquement conducteur forment au moins deux électrodes de traitement qui sont dotées respectivement d'un élément de raccordement (19, 20) et sont séparées par les couches électriquement non conductrices (16, 18),
**caractérisé en ce que**
les couches formant l'enroulement (15-18) sont scellées sur un bord annulaire supérieur et un bord annulaire inférieur de l'enroulement avec une masse de scellement en matière plastique,
les éléments de raccordement (19, 20) sont formés respectivement d'au moins une bande d'un matériau électriquement conducteur constitué d'une feuille métallique ou d'une tôle métallique et enveloppés avec les couches (15, 18) de telle sorte que les bandes du matériau électriquement conducteur soient englobées complètement après le scellement des bords annulaires de l'enroulement avec la masse de scellement dans celle-ci, dans lequel les éléments de raccordement (19, 20) s'étendent respectivement uniquement sur une fraction de la hauteur de l'unité d'électrode (12),
les éléments de raccordement (19, 20) sont dotés d'une conduite de raccordement (19.2, 20.2) et
les cylindres d'appui (13, 14) sont constitués d'un matériau électriquement isolant.

2. Dispositif selon la revendication 1, **caractérisé en ce que** les bandes de métal (19.1, 20.1) formant les éléments de raccordement (19, 20) sont reliées par soudure et/ou collage avec un adhésif électriquement conducteur à la couche électriquement conductrice (15, 17) correspondante.

3. Dispositif selon l'une des revendications précédentes, **caractérisé en ce que** les bandes de matériau électriquement conducteur formant les éléments de raccordement (19, 20) s'étendent sur une grande partie de la longueur des couches formants les électrodes (15, 17).

4. Dispositif selon l'une des revendications précédentes, **caractérisé en ce que** les bandes de matériau électriquement conducteur formant les éléments de raccordement (19, 20) sont formées du matériau électriquement conducteur par métallisations appliquées sur les couches électriquement conductrices (15, 17), par exemple, en utilisant des pâtes formant les métallisations, par dépôt chimique et/ou électrolytique.
